# EUROPEAN PATENT SPECIFICATION

(11) **EP 3 955 533 B1**
(45) Date of publication and mention of the grant of the patent: **11.12.2024**
(21) Application number: 20798679.5
(22) Date of filing: 28.04.2020
(51) Int. Cl.: H04L 47/33, H04L 47/26, H04L 45/00, H04L 47/11, H04L 69/40, H04L 45/50, H04L 47/17, H04L 47/35, H04L 67/563

(54) **CONGESTION INFORMATION ACQUISITION METHOD AND SYSTEM, RELATED DEVICE AND COMPUTER STORAGE MEDIUM**
ÜBERLASTUNGSINFORMATIONERFASSUNGSVERFAHREN UND -SYSTEM, ZUGEHÖRIGE VORRICHTUNG UND COMPUTERSPEICHERMEDIUM
PROCÉDÉ ET SYSTÈME D'ACQUISITION D'INFORMATIONS DE CONGESTION, DISPOSITIF ASSOCIÉ ET SUPPORT D'INFORMATIONS POUR ORDINATEUR

(30) Priority: 30.04.2019 CN 201910370837
(43) Date of publication of application: 16.02.2022
(73) Proprietor: Huawei Technologies Co., Ltd., Shenzhen, Guangdong 518129 (CN)
(72) Inventor: GENG, Xuesong, Shenzhen, Guangdong 518129 (CN); ZHOU, Tianran, Shenzhen, Guangdong 518129 (CN); CHEN, Guoyi, Shenzhen, Guangdong 518129 (CN)
(74) Representative: Gill Jennings & Every LLP
(86) International application number: PCT/CN2020/087357
(87) International publication number: WO 2020/221224

(56) References cited:
- CN-A- 103 139 014
- CN-A- 104 579 999
- CN-A- 107 548 120
- US-A1- 2006 221 820
- US-A1- 2012 147 752
- US-A1- 2017 176 193
- FILSFILS C ET AL: "Segment Routing Architecture; rfc8402.txt", SEGMENT ROUTING ARCHITECTURE; RFC8402.TXT, INTERNET ENGINEERING TASK FORCE, IETF; STANDARD, INTERNET SOCIETY (ISOC) 4, RUE DES FALAISES CH- 1205 GENEVA, SWITZERLAND, 25 July 2018 (2018-07-25), pages 1 - 32, XP015126362

## Description

### TECHNICAL FIELD

The present invention relates to the field of communications technologies, and in particular, to a congestion information collection method and system, a related device, and a computer storage medium.

### BACKGROUND

Network congestion, a phenomenon of network overload, means that incoming traffic exceeds storage and forwarding capabilities of a network node when a large number of packets pass through the network node at the same time, causing a decrease in throughput, an increase in delay, and packet loss. Severe network congestion may lead to congestive collapse, and cause interruption of network communication services.

Currently, whether network congestion occurs or how severe is the congestion is determined based on path congestion information that is recorded at a granularity of paths. Accordingly, operations responding to the congestion are also performed based on congestion information recorded at a granularity of paths, and consequently a new forwarding path for a sending node to send a new packet may still include a congested node. Currently, because congestion information of each path is collected separately, congestion information of overlapping links or intersected nodes cannot be shared when there are overlapping links or intersected nodes on different paths. As a result, efficiency of collecting network congestion information is relatively low.

US2012147752A1 describes a packet header in a source routed network is augmented to include, with each hop identifier, at least one bit for indicating congestion at the particular hop.

US2006221820A1 describes A method and system for fairly adjusting the bandwidth among distributed network elements.

The publication from Filsfils C et al, titled "Segment Routing Architecture; rfc8402.txt", Segment Routing Architecture; RFC8402.TXT, Internet Engineering Task Force, IETF; Standard, Internet Society (ISOC) 4, Rue Des Falaises CH- 1205 Geneva, Switzerland, pages 1 - 32 describes that segment routing can be applied to IPv6 architecture with a particular type of routing header called the SR Header.

### SUMMARY

Embodiments of the present invention disclose a congestion information collection method. By encapsulating a plurality of parameter fields that can be used to record congestion information into a packet, a node on a forwarding path of the packet can record congestion information of a plurality of segment links of a transmission path of the packet. Further, a source node can plan a transmission path of a new packet based on congestion information of each segment link, to avoid a congested link in the third congestion information table or a link whose congestion degree is greater than a second preset threshold.

According to a first aspect, this application provides a network congestion information collection method in accordance with appended claim 1.

According to the congestion information collection method provided in this application, a plurality of parameter fields that can be used to record congestion information are encapsulated into a packet, so that congestion information of a plurality of segment links of a transmission path of a packet can be recorded during transmission of the packet. Then, a target node can feed back, to a source node, the congestion information of the plurality of segment links recorded in the packet, so that the source node can maintain a file that records the congestion information of the plurality of segment links in a network. When sending a new packet, the source node can plan a transmission path of the new packet based on congestion information of each segment link. This can avoid the following case in which a specific location where congestion occurs cannot be located when a network congestion status is recorded based on the entire transmission path, and consequently the new packet cannot bypass the congested location.

In a specific implementation, that the first connection node obtains a congestion degree of the egress port, and uses the congestion degree as the congestion information of the segment link including the first connection node includes:
the first connection node obtains the congestion degree of the egress port; and
when the congestion degree of the egress port is greater than a first preset threshold, the first connection node determines that a link is congested between the first connection node and the second connection node, and uses the information that the link is congested between the first connection node and the second connection node as the congestion information; or
when the congestion degree of the egress port is less than or equal to the first preset threshold, the first connection node determines that a link is not congested between the first connection node and the second connection node, and uses the information that the link is not congested between the first connection node and the second connection node congestion information as the congestion information.

In a specific implementation, the segment link including the first connection node is a segment link between the first connection node and a previous connection node on the forwarding path of the first packet. The obtaining congestion information of a segment link including the first connection node includes:
the first connection node obtains congestion information in a congestion field, where the congestion information in the congestion field indicates a congestion status of a link between the first connection node and a third connection node, the third connection node is a previous connection node on the forwarding path, and the congestion information in the congestion field is recorded by a forwarding node located on a segment link between the third connection node and the first connection node or recorded by the third connection node; and
the first connection node uses the congestion information in the congestion field as the congestion information of the segment link.

In a specific implementation, the method further includes:
the first connection node obtains address information of a next node on the forwarding path of the first packet;
the first connection node determines, based on the address information of the next node, an egress port through which the first connection node forwards the first packet; and
the first connection node obtains a congestion degree of the egress port, and records the congestion degree in the congestion field.

In a specific implementation, after the first connection node obtains the congestion information in the congestion field, the method further includes:
that the first connection node obtains a congestion degree of the egress port, and records the congestion degree in the congestion field includes:
the first connection node obtains the congestion degree of the egress port; and when the congestion degree is greater than a first preset threshold, the first connection node determines that a link is congested between the first connection node and the next node, and records the information that the link is congested between the first connection node and the next node in the congestion field; or
the first connection node obtains the congestion degree of the egress port; and when the congestion degree is less than or equal to the first preset threshold, the first connection node determines that a link is not congested between the first connection node and the next node, and records the information that the link is not congested between the first connection node and the next node in the congestion field.

In a specific implementation, the first packet includes a plurality of segment identifier fields, and each of the plurality of segment identifier fields includes address information and a parameter field that are corresponding to a connection node on the forwarding path.

In a specific implementation, that the first connection node records the congestion information in a parameter field corresponding to the first connection node in the first packet includes:
the first connection node obtains address information of the first connection node;
the first connection node determines, based on the address information of the first connection node and address information in the plurality of segment identifier fields, a segment identifier field corresponding to the first connection node in the first packet; and
the first connection node records the congestion information in a parameter field of a segment identifier field corresponding to the first connection node in the first packet.

According to a second aspect, this application provides a network congestion information collection method in accordance with appended claim 4.

In a specific implementation, the source node obtains a destination address of a second packet.

The source node plans a forwarding path of the second packet based on locally updated congestion information, to avoid a segment link whose congestion degree is greater than a second preset threshold or a congested link in a planning process.

In a specific implementation, before the source node sends the first packet to the target node, the method further includes:
The source node encapsulates a plurality of segment identifier fields into the first packet, where each of the plurality of segment identifier fields includes address information corresponding to one connection node on the forwarding path and the parameter field.

According to a third aspect, an embodiment of this application provides a congestion information collection apparatus in accordance with appended claim 7.

In a specific implementation, the processing unit is specifically configured to:
obtain the congestion degree of the egress port; and
when the congestion degree of the egress port is greater than a first preset threshold, determine that a link is congested between the congestion information collection apparatus and the second connection node, and use the information that the link is congested between the congestion information collection apparatus and the second connection node as the congestion information; or
when the congestion degree of the egress port is less than or equal to the first preset threshold, determine that the link is not congested between the congestion information collection apparatus and the second connection node, and use the information that the link is not congested between the congestion information collection apparatus and the second connection node as the congestion information.

In a specific implementation, the segment link including the congestion information collection apparatus is a segment link between the congestion information collection apparatus and a previous connection node on the forwarding path of the first packet, and the processing unit is specifically configured to:
obtain congestion information in a congestion field, where the congestion information in the congestion field indicates a congestion status of a link between the congestion information collection apparatus and a third connection node, the third connection node is a previous connection node on the forwarding path, and the congestion information in the congestion field is recorded by a forwarding node located on a segment link between the third connection node and the congestion information collection apparatus or recorded by the third connection node; and
use the congestion information in the congestion field as the congestion information of the segment link.

In a specific implementation, after the first connection node obtains the congestion information in the congestion field, the processing unit is further configured to:
obtain address information of a next node on the forwarding path of the first packet;
determine, based on the address information of the next node, an egress port through which the congestion information collection apparatus forwards the first packet; and
obtain the congestion degree of the egress port, and record the congestion degree in the congestion field.

In a specific implementation, the processing unit is specifically configured to:
obtain the congestion degree of the egress port; and when the congestion degree is greater than a first preset threshold, determine that a link is congested between the congestion information collection apparatus and the next node, and record the information that the link is congested between the congestion information collection apparatus and the next node in the congestion field; or
obtain the congestion degree of the egress port; and when the congestion degree is less than or equal to the first preset threshold, determine that the link is not congested between the congestion information collection apparatus and the next node, and record the information that the link is not congested between the congestion information collection apparatus and the next node in the congestion field.

In a specific implementation, the first packet includes a plurality of segment identifier fields, and each of the plurality of segment identifier fields includes address information and a parameter field that are corresponding to a connection node on the forwarding path.

In a specific implementation, the processing unit is specifically configured to:
obtain address information of the congestion information collection apparatus;
determine, based on the address information of the congestion information collection apparatus and address information in the plurality of segment identifier fields, a segment identifier field corresponding to the congestion information collection apparatus in the first packet; and
record the congestion information in a parameter field of the segment identifier field corresponding to the congestion information collection apparatus in the first packet.

According to a fourth aspect, an embodiment of this application provides a congestion information collection apparatus in accordance with appended claim 9.

In a specific implementation, the processing unit is specifically configured to:
obtain a destination address of a second packet; and
plan a forwarding path of the second packet based on locally updated congestion information, to avoid a segment link whose congestion degree is greater than a second preset threshold or a congested link in a planning process.

In a specific implementation, before the communications unit sends the first packet to the target node, the processing unit is further configured to:
encapsulate a plurality of segment identifier fields into the first packet, where each of the plurality of segment identifier fields includes address information corresponding to one connection node on the forwarding path and the parameter field.

According to a fifth aspect, an embodiment of this application provides a congestion information collection system in accordance with appended claim 12. The system includes a source node, a target node, and a plurality of connection nodes.

In a specific implementation, that the first connection node obtains a congestion degree of the egress port, and uses the congestion degree as the congestion information of the segment link including the first connection node includes:
the first connection node obtains the congestion degree of the egress port; and
when the congestion degree of the egress port is greater than a first preset threshold, the first connection node determines that a link is congested between the first connection node and the second connection node, and uses the information that the link is congested between the first connection node and the second connection node as the congestion information; or
when the congestion degree of the egress port is less than or equal to the first preset threshold, the first connection node determines that a link is not congested between the first connection node and the second connection node, and uses the information that the link is not congested between the first connection node and the second connection node congestion information as the congestion information.

In a specific implementation, the segment link including the first connection node is a segment link between the first connection node and a previous connection node on the forwarding path of the first packet. That the first connection node obtains congestion information of a segment link including the first connection node includes:
the first connection node obtains congestion information in a congestion field, where the congestion information in the congestion field indicates a congestion status of a link between the first connection node and a third connection node, the third connection node is a previous connection node on the forwarding path, and the congestion information in the congestion field is recorded by a forwarding node located on a segment link between the third connection node and the first connection node or recorded by the third connection node; and
the first connection node uses the congestion information in the congestion field as the congestion information of the segment link.

In a specific implementation, after the first connection node obtains congestion information in the congestion field, the first connection node is further configured to following operations:
obtain address information of a next node on the forwarding path of the first packet;
determine, based on the address information of the next node, an egress port through which the first connection node forwards the first packet; and
obtain a congestion degree of the egress port, and records the congestion degree in the congestion field.

In a specific implementation, that the first connection node obtains a congestion degree of the egress port, and records the congestion degree in the congestion field comprises:
the first connection node obtains the congestion degree of the egress port; and when the congestion degree is greater than a first preset threshold, the first connection node determines that a link is congested between the first connection node and the next node, and records the information that the link is congested between the first connection node and the next node in the congestion field; or
the first connection node obtains the congestion degree of the egress port; and when the congestion degree is less than or equal to the first preset threshold, the first connection node determines that a link is not congested between the first connection node and the next node, and records the information that the link is not congested between the first connection node and the next node in the congestion field.

In a specific implementation, the source node encapsulates a plurality of segment identifier fields into the first packet, where each of the plurality of segment identifier fields includes address information corresponding to one connection node on the forwarding path and the parameter field.

In a specific implementation, that the first connection node records the congestion information in a parameter field corresponding to the first connection node in the first packet includes:
the first connection node obtains address information of the first connection node;
the first connection node determines, based on the address information of the first connection node and address information in the plurality of segment identifier fields, a segment identifier field corresponding to the first connection node in the first packet; and
the first connection node records the congestion information in a parameter field of a segment identifier field corresponding to the first connection node in the first packet.

In a specific implementation, the source node is further configured to:
obtain a destination address of a second packet; and
plan a forwarding path of the second packet based on locally updated congestion information, to avoid a segment link whose congestion degree is greater than a second preset threshold or a congested link in a planning process.

### BRIEF DESCRIPTION OF DRAWINGS

To describe the technical solutions in the embodiments of the present invention more clearly, the following briefly introduces the accompanying drawings for describing the embodiments. It is clearly that the accompanying drawings in the following description show some embodiments of the present invention, and persons of ordinary skill in the art may still derive other drawings from these accompanying drawings without creative efforts.
FIG. 1 is a schematic diagram of packet transmission according to an embodiment of this application;
FIG. 2 is a schematic diagram depicting a structure of a data center scenario according to an embodiment of this application;
FIG. 3 is a schematic diagram of a segment route extension header SRH according to an embodiment of this application;
FIG. 4 is a schematic diagram of transmitting a packet through SRv6 according to an embodiment of this application;
FIG. 5 is a schematic interaction diagram of a network congestion information collection method according to an embodiment of this application;
FIG. 6 is a schematic diagram of collecting congestion information in a data center scenario according to an embodiment of this application;
FIG. 7 is a schematic diagram depicting a structure of another SRH according to an embodiment of this application;
FIG. 8 is a schematic diagram of collecting congestion information in a wide area network scenario according to an embodiment of this application;
FIG. 9 is a schematic diagram depicting a structure of a congestion information collection apparatus according to an embodiment of this application;
FIG. 10 is a schematic diagram depicting a structure of another congestion information collection apparatus according to an embodiment of this application; and
FIG. 11 is a schematic diagram depicting a structure of a congestion information collection device according to an embodiment of this application.

### DESCRIPTION OF EMBODIMENTS

The following describes in detail the embodiments of this application with reference to accompanying drawings.

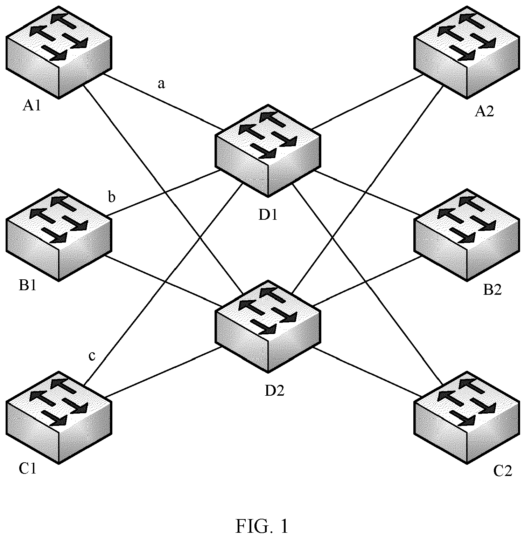

As shown in FIG. 1, a node A1, a node B 1, and a node C1 are sending nodes. A packet a is a packet that is sent by the node A1 to a node A2, a packet b is a packet that is sent by the node B1 to a node B2, and a packet c is a packet that is sent by the node C1 to a node C2. The packet a, the packet b, and the packet c all pass through a node D1. If the node D1 is congested, a congested packet is discarded or marked as a congestion packet. After learning that a packet is discarded or a packet is marked, a receiving node feeds back congestion information to a corresponding sending node. For example, when the packet b is marked as a congestion packet, after receiving the packet b, the node B2 feeds back, to the node B 1, that congestion occurs during transmission of the packet b. In this case, the node B1 performs congestion control. For example, the node B1 reduces a sending rate or sends a packet to the node B2 through another path.

However, in the foregoing method, because not all packets passing through the node D1 can be marked as congestion packets. For example, if the packet a and the packet c are not marked as congestion packets, the node A1 and the node C1 receive no congestion information. Therefore, the node A1 and the node C1 do not perform congestion control, and still send packets at a rate through a path, where the rate and the path are the same as those used before congestion occurs. Consequently, the node D1 is still congested. In addition, because a node receiving the congestion information cannot determine a specific congested node, after receiving the congestion information, a sending node selects another path to send a packet, and the reselected path may still include the congested node. Consequently, congestion control fails.

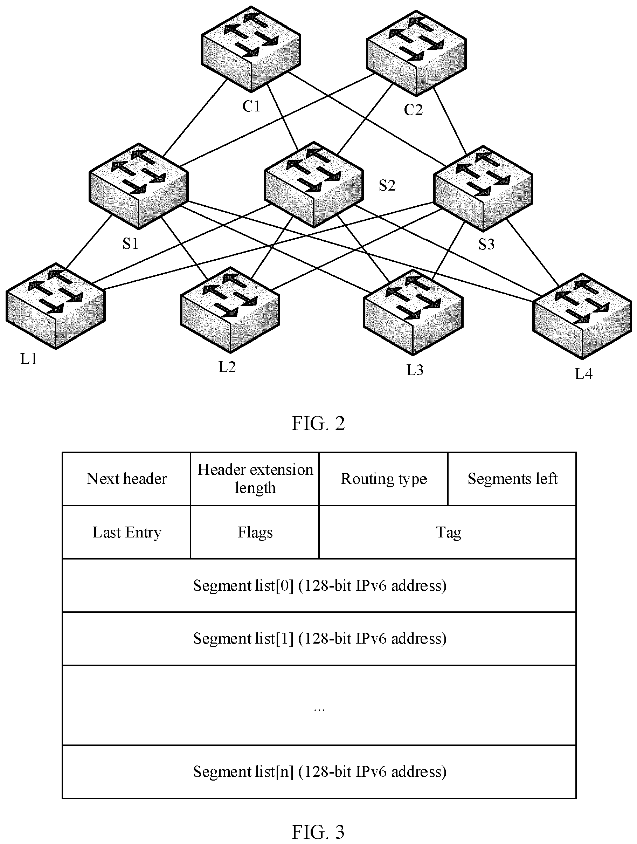

FIG. 2 is a diagram of a network topology in a data center scenario. In FIG. 2, a packet sent by a source node L1 to a target node L4 is encapsulated by using a virtual extensible local area network (virtual extensible local area network, VXLAN) technology, and the packet may be transmitted from the source node L1 to the target node L4 through k links. A CE field is encapsulated into the packet. After the source node L1 determines that a transmission path of the packet is a path 2, the CE field is used to carry a highest congestion degree in the path 2. For example, the path 2 between the source node L1 and the target node L4 includes three nodes: a node S1, a node C1, and a node S2. If a congestion degree between the source node L1 and the node S1 is 2, 2 is written into the CE field. Then, the packet is transmitted to the node C1. If a congestion degree between the node S1 and the node C1 is 1, a value in the CE field remains unchanged. The packet continues to be transmitted to the node S2. If a congestion degree between the node C1 and the node S2 is 3, the node S2 rewrites the value in the CE field to 3. After the target node L4 receives the packet, if a congestion degree between the node S2 and the node L4 is 2, the value in the CE field remains unchanged. The node L4 obtains the congestion degree of the path 2 from the CE field, and updates a congestion information table in the target node L4, where the congestion information table in the node L4 records congestion information of one or more paths whose target node is the node L4. The node L4 sends the congestion degree information in the congestion information table to the source node L1, so that the source node L1 updates a congestion information table in the source node L 1. When sending a new packet, the source node L1 can perform congestion load balancing or flow control based on congestion degree information of different transmission paths.

However, in the foregoing method, a source node needs to maintain congestion degree information of each path in a network. In a layer 3 network or a wide area network scenario, a plurality of path states need to be maintained, and congestion information needs to be collected for each path separately. Even if two or more paths overlap, congestion information cannot be shared. As a result, efficiency of collecting congestion information is low.

To resolve the foregoing problem, this application provides a congestion information collection method. Before the method in the embodiments of this application is described, related concepts in the embodiments of this application are first described.

Segment routing (segment routing, SR) is a source-based routing protocol. A basic idea of SR is as follows: A segment identifier (segment identifier, SID) is allocated to each node, a source node specifies a transmission path for a packet that needs to be transmitted, and converts the SIDs of all the nodes on the transmission path into an ordered segment list (segment list) and encapsulates the ordered segment list into a packet header; after receiving the packet, each node on the path only needs to forward the packet based on a path specified by the SID in the segment list. This can simplify data transmission in a network.

Segment routing over IPv6 (segment routing over IPv6, SRv6) is a protocol designed based on source routing for forwarding IPv6 data packets in a network. To implement an SR solution based on an IPv6 forwarding plane, an IPv6 extension header, also referred to as a segment routing header (segment routing header, SRH), is added to an SRv6 packet. To be specific, an IPv6 packet includes an IPv6 standard header, an SRH, and a payload (payload). The source node adds an SRH to each packet. Each SRH carries all SIDs required for forwarding the packet. Each SID is an instantiated IPv6 address and includes a locator (locator) field and a function (function) field. The locator field mainly provides a routing function. The function field indicates any function of a device, for example, a forwarding behavior or a service. In other words, a segment list in the SR corresponds to an IPv6 address list in the SRH. The SRH carries routing information of all transit nodes that the packet needs to pass through. During transmission, a transit node only needs to transmit a packet based on the routing information included in the SRH. A format of the SRH is shown in FIG. 3. For ease of describing a forwarding principle, the SRH may be represented as the following table:

| IPv6 Destination Address = Segment List [n] |
|---|
| SRH(Segments Left = n) |
| < Segment List [0], Segment List [1], Segment List [2], |
| Segment List [3], ..., Segment List [n]> |

In SRv6, an IPv6 destination address (IPv6 destination address, IPv6 DA) is used to identify an address of a next node on a forwarding path of a packet. A segments left (segments left, SL) field indicates a quantity of nodes that the packet needs to pass through before the packet arrives at a target node. Each time the packet arrives at a node, the IPv6 DA changes to an address of a next node, and a value of the SL field decreases by 1.

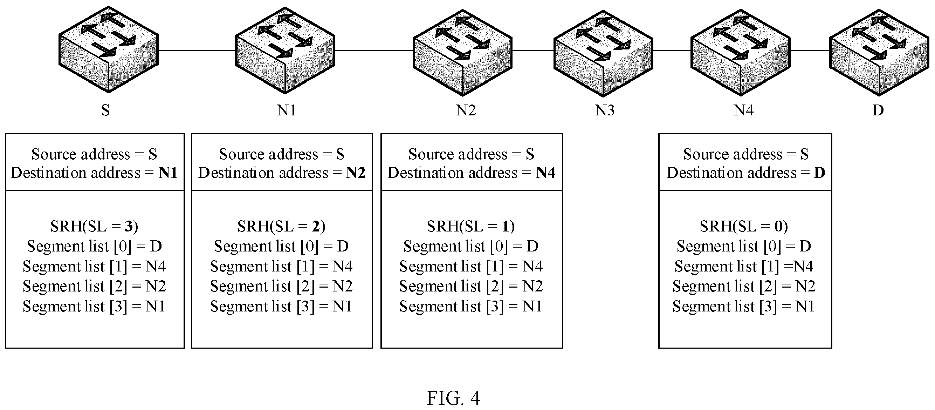

For example, FIG. 4 is a schematic diagram of transmitting a packet through SRv6. A node S sends a packet to a node D. The node S, a node N1, a node N2, a node N4, and a node D have an SRv6 function, but a node N3 does not have an SRv6 function. The node S encapsulates an SRH into the packet. As shown in FIG. 4, on the node S, an IPv6 DA in the packet is an address corresponding to the node N1, and a value of an SL is 3. After receiving the packet, the node N1 determines that the IPv6 DA is an address of the node N1, where SL = 3. Then the node N1 decreases the value of the SL by 1, updates the value of the SL to 2, updates the IPv6 DA to an address in a segment list [2] in a segment list, and forwards the packet to the node N2. After receiving the packet, the node N2 determines that the IPv6 DA is an address of the node N2, where SL = 2. Then the node N2 decreases the value of the SL by 1, updates the value of the SL to 1, updates the IPv6 DA to an address in a segment list [1] in the segment list, and forwards the packet to the node N3. Because the node N3 does not have the SRv6 function, the node N3 does not process the packet, and transparently transmits the packet to node N4 based on a routing table. After receiving the packet, the node N4 determines that the IPv6 DA is an address of the node N4, where SL = 1. Then the node N4 decreases the value of the SL by 1, updates the value of the SL to 0, updates the IPv6 DA to an address in a segment list [0] in the segment list, and forwards the packet to the node D.

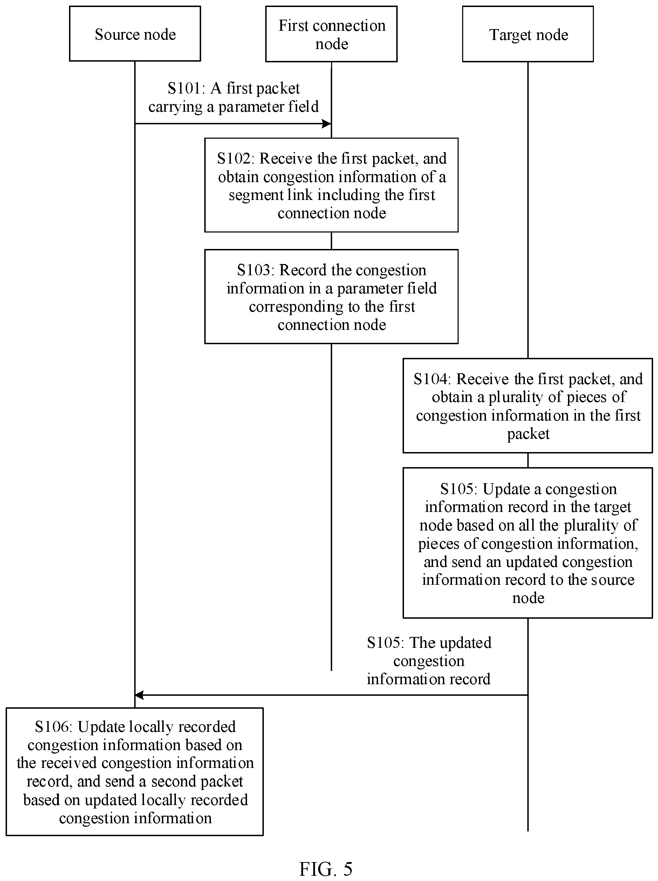

FIG. 5 is a schematic interaction diagram of a network congestion information collection method according to an embodiment of this application. As shown in FIG. 5, the method includes the following steps.

S 101: A source node sends a first packet.

In this embodiment of this application, a forwarding path of the first packet includes a plurality of connection nodes. The forwarding path of the first packet is divided by the plurality of connection nodes into a plurality of segment links. The first packet includes a plurality of parameter fields respectively corresponding to the plurality of connection nodes. Each of the plurality of parameter fields is used to record congestion information of a segment link. In a process of forwarding the first packet, any connection node on the forwarding path of the first packet can obtain congestion information of a segment link including the connection node, and records the obtained congestion information in a parameter field corresponding to the connection node. The congestion information includes whether a segment link is congested or a congestion degree of the segment link.

S102: A first connection node receives the first packet, and obtains congestion information of a segment link including the first connection node.

In this embodiment of this application, the first connection node is any one of the plurality of connection nodes. After receiving the first packet, the first connection node obtains the congestion information of the segment link including the first connection node. On the segment link including the first connection node, the first connection node is the 1^{st} node through which the first packet passes on the segment link or the last node through which the first packet passes on the segment link.

In a specific implementation, if each node in a network can collect congestion information of a segment link and write the congestion information into a corresponding parameter field, the first connection node obtains address information of a second connection node, where the second connection node is a next node that the first packet arrives on the forwarding path of the first packet. Then, the first connection node determines, based on the address information of the second connection node, an egress port through which the first packet is sent from the first connection node to the second connection node, obtains a congestion degree of the egress port, and uses the congestion degree as the congestion information. The congestion degree indicates a congestion status of a segment link between the first connection node and the second connection node. Alternatively, after determining the congestion degree of the egress port, the first connection node determines whether the congestion degree is greater than a first preset threshold. If the congestion degree is greater than the first preset threshold, the first connection node determines that the egress port is congested, and uses the information that the egress port is congested as the congestion information of the segment link including the first connection node. If the congestion degree is less than or equal to the first preset threshold, the first connection node determines that the egress port is not congested, and uses the information that the egress port is not congested as the congestion information of the segment link including the first connection node.

According to the claimed invention, the congestion degree is represented by a congestion level, and a higher congestion level indicates more severe congestion. The congestion level may be determined based on a queue length of an egress port. For example, when there are 1 to 3 packets waiting to be forwarded through the egress port, it is determined that the congestion level of the egress port is 0; when there are 4 to 6 packets waiting to be forwarded through the egress port, it is determined that the congestion level of the egress port is 1; when there are 7 to 9 packets waiting to be forwarded through the egress port, it is determined that the congestion level of the egress port is 2; and the congestion level of the egress port in other cases can be determined by analogy. It may be understood that the foregoing descriptions are merely examples. There may be another correspondence between a quantity of packets to be forwarded through the egress port and the congestion level. This is not specifically limited in the embodiments of this application.

In a specific implementation, not all nodes in a network have a corresponding parameter field in the first packet, that is, not all nodes can write collected congestion information into the corresponding parameter field. Some nodes in the network may have no corresponding parameter field in the first packet, and such nodes are referred to as common forwarding nodes. For example, in a network such as a wide area network, a forwarding path of a packet includes a large quantity of forwarding nodes. If each of the forwarding nodes collects and records congestion information, a large quantity of empty bytes need to be reserved in the packet for all the forwarding nodes to record congestion information, occupying a large quantity of storage resources and bandwidth resources. Therefore, only some nodes on the forwarding path of the packet on the wide area network are specified to collect and record congestion information. When there is a common forwarding node in the network, after receiving the first packet, the first connection node reads congestion information in a congestion field, and writes the congestion information in the congestion field into a parameter field corresponding to the first connection node. The congestion information in the congestion field is congestion information of a segment link between the first connection node and a third connection node. The third connection node is a connection node located before the first connection node on the forwarding path. There are one or more common forwarding nodes between the first connection node and the third connection node. The congestion information in the congestion field is recorded by a common forwarding node located on the segment link between the third connection node and the first connection node or recorded by the third connection node.

When the congestion information indicates the congestion degree of the segment link, the congestion information in the congestion field is a highest congestion degree between the first connection node and the third connection node. For example, there are two common forwarding nodes N1 and N2 between the third connection node and the first connection node. If the third connection node determines that a congestion degree of a segment link between the third connection node and the common forwarding node N1 is 3, the third connection node writes the congestion degree 3 into a congestion field. After the first packet arrives at the common forwarding node N1, a congestion degree of a segment link between the common forwarding node N1 and the common forwarding node N2 is 2, and the node N1 does not change the value in the congestion field. After the first packet arrives at the common forwarding node N2, the common forwarding node N2 determines that a congestion degree of a segment link between the common forwarding node N2 and the first connection node is 4, and the common forwarding node N2 changes the value in the congestion field to 4. After receiving the first packet, the first connection node obtains the congestion degree 4 in the congestion field, and writes the congestion degree into the parameter field corresponding to the first connection node. When the congestion information indicates whether the segment link is congested, the first connection node needs to determine, based on a congestion indication identifier in the congestion field, whether the segment link between the first connection node and the third connection node is congested. Specifically, after receiving the first packet, the first connection node obtains a value of the congestion indication identifier. When the value of the congestion indication identifier is 1, the first connection node determines that the segment link is congested between the first connection node and the third connection node. When the value of the congestion indication identifier is 0, the first connection node determines that the segment link is not congested between the first connection node and the third connection node.

There are one or more common forwarding nodes between the first connection node and the third connection node. If one common forwarding node determines that a link is congested between the common forwarding node and a next node after receiving the first packet, the common forwarding node sets the congestion indication identifier to 1. After receiving the first packet, another common forwarding node does not change the congestion indication identifier. In this way, the congestion indication identifier can be used to indicate whether congestion occurs between the first connection node and the third connection node.

In a possible implementation, the congestion indication identifier may be an explicit congestion notification (explicit congestion notification, ECN) flag. When sending the first packet, a sending node that generates the first packet sets the ECN flag to 01 or 10. If any common forwarding node on the forwarding path of the first packet determines that congestion occurs after receiving the first packet, the common forwarding node sets the ECN flag to 11.

S 103: The first connection node records the congestion information in the parameter field corresponding to the first connection node in the first packet.

In this embodiment of this application, each connection node has a corresponding parameter field. After obtaining the congestion information of the segment link including the first connection node, the first connection node records the congestion information in the parameter field corresponding to the first connection node in the first packet.

It may be understood that there are a plurality of connection nodes between the sending node and a target node, and the first packet includes a plurality of parameter fields. Therefore, congestion information of a plurality of segment links on the forwarding path of the first packet may be recorded in the first packet. Congestion information in each of the plurality of parameter fields indicates a congestion status of a segment link.

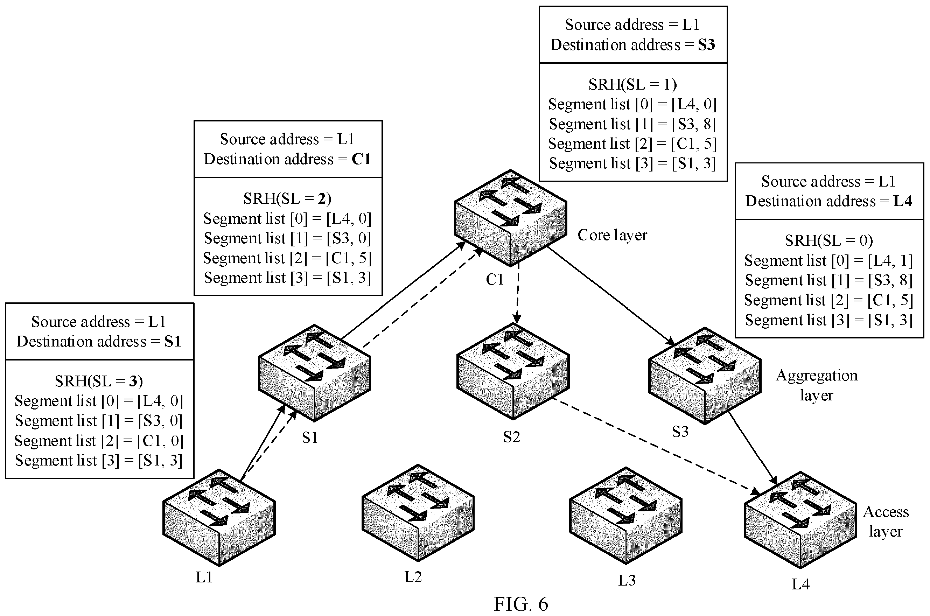

For example, FIG. 6 is a schematic diagram of a network architecture of a data center according to an embodiment of this application. In a layer 3 network architectural diagram in a data center scenario shown in FIG. 6, switches L1 to L4 are access layer switches, switches S 1 to S3 are aggregation layer switches, and a switch C1 is a core layer switch. The switch L1 is a source node, and the switch L4 is a target node. The first packet is transmitted to the target node through a path L1-S1-C1-S3-L4. If all nodes in FIG. 6 are connection nodes, that is, all the nodes have respective corresponding parameter fields in the first packet. After the first packet is transmitted to the switch L4, congestion information recorded in the first packet is listed in the following Table 2.

**Table 2**

| Segment link | L1-S1 | S1-C1 | C1-S3 | S3-L4 |
|---|---|---|---|---|
| Congestion degree | 3 | 5 | 8 | 1 |

S104: The target node receives the first packet, and obtains a plurality of pieces of congestion information in the first packet.

S105: The target node updates a congestion information record in the target node based on all the plurality of pieces of congestion information, and sends an updated congestion information record to the source node.

The congestion information record records congestion information of one or more segment links in a network in which the target node is located. After receiving the first packet, the target node reads the plurality of pieces of congestion information in the first packet, updates, based on the congestion information that is of each segment link and that is recorded in the first packet, the congestion information record stored in the target node, and sends the updated congestion information record to the source node. That the target node updates the congestion information record includes: The target node adds, to the congestion information record, congestion information of a segment link that is included in the first packet but that is not included in the congestion information record, and updates congestion information of a corresponding segment link in the congestion information record based on the congestion information of each segment link in the first packet. For example, the congestion information record in the target node may be a congestion information table recording congestion information of a segment link. If a congestion degree of a link "L1-S1" in the congestion information table is 5, and congestion information of a link "C1-S3" is 4, after receiving the first packet, the target node updates the congestion degree of the link "L1-S1" to 3, and updates the congestion information of the link "C1-S3" to 8.

S106: The source node receives the updated congestion information record sent by the target node, and updates locally recorded congestion information based on the received congestion information record.

After receiving the congestion information record sent by the target node, the source node updates, based on the congestion information of each segment link in the congestion information record, the congestion information locally recorded by the source node, so that the source node plans a forwarding path of a second packet based on the updated locally recorded congestion information before sending the second packet next time, to avoid a congested link in the locally recorded congestion information or avoid a link whose congestion degree is greater than a second preset threshold. Alternatively, when the forwarding path of the second packet includes a congested link or includes a link whose congestion degree is greater than the second preset threshold, the source node informs a node that generates a packet to reduce a packet sending rate.

The scenario shown in FIG. 6 is still used as an example. The node L1 is a source node. After the node L1 updates the locally recorded congestion information, if the L1 further needs to send the second packet to the node L4, the node L1 may plan the transmission path of the second packet based on the updated locally recorded congestion information. Because the congestion degree of the link "C1-S3" is 8, congestion is severe, when planning the transmission path, the node L1 prevents the second packet from passing through the link "C1-S3". As shown by dashed lines in FIG. 6, a finally planned transmission path is "L1-S1-C1-S2-L4". If the transmission path "L1-S1-C1-S2-L4" also includes a congested segment link, the source node may inform a node that generates the second packet to reduce a packet sending rate.

Each segment link on the forwarding path of the first packet may also be a segment link on another forwarding path. For example, in FIG. 6, the first packet is transmitted to the target node L4 through a path "L1-S1-C1-S3-L4", where the segment link "C1-S3" may also be a segment link of a path "L1-S1-C1-S3-L3" through which a packet whose target node is a node L3 passes. Therefore, after congestion information obtained by a target node is fed back to a source node, the congestion information may be used by the source node to plan a transmission path of a packet when the source node sends a packet to another target node.

According to the congestion information collection method provided in this application, a plurality of parameter fields that can be used to record congestion information are encapsulated into a packet, so that congestion information of a plurality of segment links on a transmission path of a packet can be recorded during transmission of the packet, instead that only one piece of congestion information is recorded for one forwarding path. Then, a target node can feed back, to a source node, the congestion information of the plurality of segment links recorded in the packet, so that the source node can maintain a file that records the congestion information of the plurality of segment links in a network. When sending a new packet, the source node can plan a transmission path of the new packet based on congestion information of each segment link. This can avoid the following case in which a specific location where congestion occurs cannot be located when a network congestion status is recorded based on the entire transmission path, and consequently the new packet cannot bypass the congested location. Alternatively, when determining that a forwarding path of the new packet that needs to be sent includes a congested link, the source node informs a node that generates the packet to reduce a packet sending rate.

In a specific implementation, the first packet includes one or more segment identifier fields. Each segment identifier field includes address information of a node and a parameter field corresponding to the node, and the address information is used to determine a parameter field corresponding to any connection node on the forwarding path of the first packet. For example, after receiving the first packet, the first connection node first determines that first address information in the one or more segment identifier fields is the same as an address of the first connection node, and the first connection node determines that a first segment identifier field corresponding to the first address information is a segment identifier field corresponding to the first connection node. The first connection node obtains the congestion information of the segment link including the first connection node, and writes the congestion information into a parameter field corresponding to the first segment identifier field.

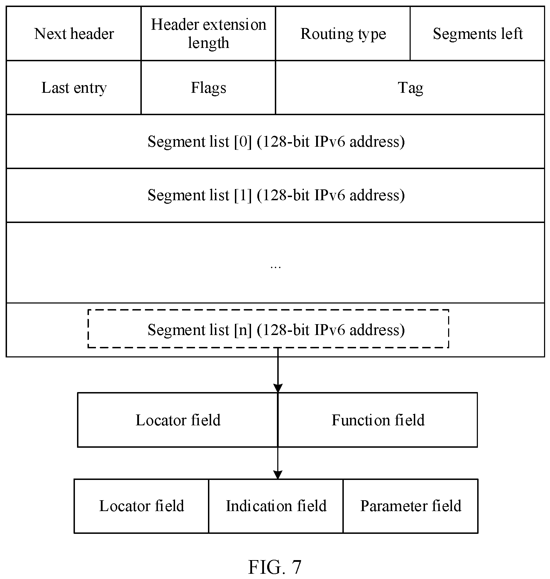

In a specific implementation, the segment identifier field may be a SID in an SRH. Before sending the first packet based on an SRv6 protocol, the source node divides a function field in each SID field in the SRH into an indication field and a parameter field, where the indication field carries indication information. FIG. 7 is a schematic diagram depicting a structure of another SRH according to an embodiment of this application. After receiving the first packet, the first connection node first obtains a value of an SL field in the SRH, determines, based on the value of the SL field, a segment list field corresponding to the first connection node, reads address information from the segment list field, determines a next DA of the first packet, and determines an egress port of the first packet based on the next DA. Then the first connection node writes collected congestion information of the egress port into a parameter field in the segment list field, and sends the first packet to the next node through the egress port.

For example, as shown in FIG. 6, before the source node L1 forwards the first packet, the source node L1 encapsulates an SRH into the first packet, where the SRH includes four SIDs in total: a segment list [0] to a segment list [3]. Address information in the four SIDs respectively corresponds to addresses of four nodes: S1, C1, S3, and L4. In this case, an address of a DA in the SRH is an address of S1, a value of SL is 3. The node L1 determines a target egress port of the first packet, and obtains that a congestion degree of the target egress port is 3, that is, a congestion degree of the link "L1-S1" is 3. The node L1 writes the congestion degree into a parameter field of the segment list [3], and sends the first packet.

The node S1 receives the first packet. Before updating the DA and the value of the SL in the SRH, the node S1 obtains the DA and the value (SL = 3) of the SL in the SRH. If the node S 1 determines that the obtained address of the DA is the same as the address of the node S 1, the node S1 decreases the value of the SL by 1, and updates the value of the SL to 2. The node S1 determines that the congestion degree of the egress port needs to be written into a parameter field of the segment list [2]. The node S 1 determines that a next DA of the first packet is an address in the segment list [2], determines a target egress port of the first packet based on the address in the segment list [2], and determines that a congestion degree of the target egress port is 5, indicating that a congestion degree of a link "S1-C1" is 5. Then, the node S1 writes the congestion degree of the target egress port into the parameter field in the segment list [2]. After writing the congestion degree into the corresponding parameter field, the node S 1 updates the DA in the SRH to the address in the segment list [2], and then sends the first packet.

After receiving the first packet, the node C1 determines an egress port of the first packet according to a processing method same as the processing method executed by the node S 1, and obtains a congestion degree of the egress port, that is, obtains a congestion degree indicating a congestion degree of a link "C1-S3". The node C1 writes the congestion degree of the egress port into a parameter field in the segment list [1]. The procedure continues by analogy until the node S3 writes a congestion degree of a link "S3-L4" into a parameter field in the segment list [0].

It may be understood that, after receiving the first packet, the first connection node may collect a congestion degree of each egress port or a congestion degree of a target egress port. Alternatively, the first connection node may determine and update congestion degrees of a plurality of egress ports every preset period, and after receiving the first packet, the first connection node obtains a congestion degree of a target egress port corresponding to the first packet as congestion information. This is not specifically limited in this embodiment of this application.

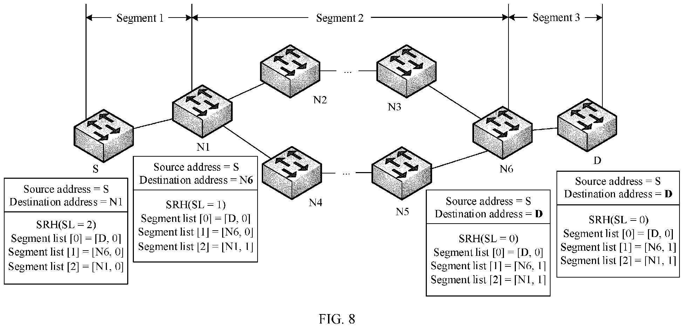

In the foregoing specific implementations, each node can collect its own congestion information and write the congestion information into a parameter field corresponding to each node. This method is applicable to a scenario, for example, the data center scenario, in which a network topology is simple and a forwarding path of a packet includes a small quantity of nodes. For a network such as a wide area network, if a corresponding segment identifier field is configured for each node, and each node can collect its own congestion information and write the congestion information into a corresponding parameter field of each node, a large amount of SRH data needs to be encapsulated in each packet. In addition, each source node also needs to maintain a large amount of congestion information. Therefore, the method in the foregoing embodiment is not applicable to the network such as the wide area network. In a specific implementation, for the network such as the wide area network, information about some nodes that a packet needs to pass through may be encapsulated into an SRH. As shown in FIG. 8, a source node S needs to transmit a first packet to a target node D through a path on which a node N2 and a node N3 are located. Because there are a large quantity of nodes between the node N2 and the node N3, only SRH information of a node N1, a node N6, and a node D is encapsulated into the first packet. In this way, an entire forwarding path of the first packet is divided into three segment links: "S-N1", "N1-N6", and "N6-D".

This embodiment of this application is described by using an example in which congestion information indicates whether a segment link is congested, and an ECN flag is used as a congestion field to record whether the segment link is congested is used for description. The node S encapsulates the SRH into the first packet, and sets an initial value of the ECN flag to 01. A value of the ECN flag being 01 indicates that a link is not congested, and a value of the ECN flag being 11 indicates that the link is congested. Then, the node S determines an egress port of the first packet, and obtains a congestion degree of the egress port. When the congestion degree is greater than a first preset threshold, the node S determines that the egress port is congested, changes a value of the ECN flag to 11 to indicate that congestion occurs on a segment link between the node S and the node N1, and sends the first packet to the node N1.

After receiving the first packet and before changing a DA in the first packet, the node N1 obtains a current DA of the first packet and a current value (SL = 2) of SL of the first packet. If the node N1 determines that the current DA is the same as an address of the node N1, the node N1 reads a value of the ECN flag. Because the value of the ECN flag is 11, the node N1 determines that the segment link "S-N1" is congested. The node N1 sets a value of a parameter field in a segment list [2] to 1, indicating that the link "S-N1" is congested; decreases the value of the SL by 1, that is, updates the value of the SL to 1; uses an address in a segment list [1] as a new DA; and updates the current DA to an address of the node N6. Then, the node N1 determines a next egress port of the first packet, and obtains a congestion degree of the egress port. If the congestion degree is less than or equal to the first preset threshold, the node N1 determines that the egress port is not congested, changes a value of the ECN flag to 01, and sends the first packet. After receiving the first packet, the node N2 obtains a current DA, and determines whether the current DA is the same as an address of the node N2. When the node N2 determines that the current DA is different from the address of the node N2, that is, the node N2 is a common forwarding node, the node N2 determines an egress port of the first packet by searching a routing table, and determines whether the egress port is congested. When determining that the egress port is congested, the node N2 reads a value of the ECN. Because the value of the ECN is 01, the node N2 changes the value of the ECN to 11. When determining that the egress port is not congested, the node N2 does not change the value of the ECN. To be specific, when the node N2 and a common forwarding node following the node N2 determine that an egress port connected to a next forwarding node is not congested, regardless of whether the value of the ECN is 01 or 11, the node N2 and the common forwarding node following the node N2 do not change the value of the ECN. When the node N2 and the common forwarding node following the node N2 determine that the egress port connected to the next node is congested, if the value of the ECN flag is 01, the node N2 and the common forwarding node following the node N2 change the value of the ECN flag to 11. If the value of the ECN flag is 11, the node N2 and the common forwarding node following the node N2 do not change the value of the ECN flag.

After receiving the first packet, the node N6 obtains a current DA of the first packet and a current value (SL = 1) of the SL of the first packet. If the node N6 determines that the current DA is the same as an address of the node N6, the node N6 reads a value of the ECN flag. If the value of the ECN flag is 11, the node N6 determines that the segment link "N1-N6" is congested, and sets a value of a parameter field in a segment list [1] to 1, indicating that the link "N1-N6" is congested. Then, the node N6 decreases the value of the SL by 1, that is, the node N6 updates the value of the SL to 0; uses an address in a segment list [0] as a new DA; and updates a current DA to an address of the node D. Then, the node N6 determines a next egress port of the first packet, and obtains a congestion degree of the egress port. When the node N6 determines that the congestion degree is less than or equal to the first preset threshold, the node N6 determines that the egress port is not congested, and the node N6 changes the value of the ECN flag to 01 and sends the first packet.

After receiving the first packet, the target node D obtains a current DA of the first packet and a current value (SL = 0) of the SL of the first packet. If the target node D determines that the current DA is the same as the address of the node D, the target node D reads a value of the ECN flag. Because the value of the ECN flag is 01, the target node D determines that the segment link "N6-D" is not congested, and sets a value of a parameter field in a segment list [0] to 0, indicating that the link "N6-D" is not congested.

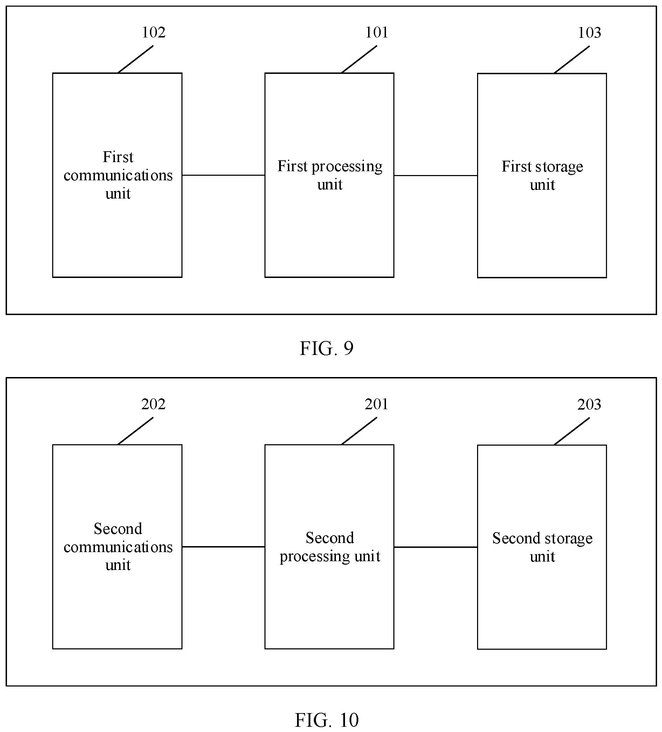

With reference to FIG. 1 to FIG. 8 and the method embodiments, the following describes related network apparatuses in the embodiments of this application. FIG. 9 is a schematic diagram depicting a structure of a congestion information collection apparatus according to an embodiment of this application. The congestion information collection apparatus 100 includes a first processing unit 101 and a first communications unit 102.

The first communications unit 102 is configured to receive a first packet.

The first processing unit 101 is configured to obtain congestion information of a segment link including a first connection node, and record the congestion information in a parameter field corresponding to the first connection node in the first packet.

The first communications unit 102 is further configured to forward the first packet into which the congestion information is written.

Specifically, the first processing unit 101 is configured to control and manage actions of the apparatus 100. For example, the first processing unit 101 is configured to perform S102 and S103 in FIG. 5, and/or is configured to perform operations performed by the first connection node in the method embodiments of this application. The first communications unit 102 is configured to receive a packet sent by another apparatus or send a packet to another apparatus.

The congestion information collection apparatus further includes a first storage unit 103. The first storage unit 103 stores program code and data. For example, the first storage unit 103 is configured to buffer a to-be-sent packet when an egress port of the apparatus is congested.

Specifically, for specific implementation of various operations performed by the apparatus 100, refer to specific operations performed by the first connection node in the foregoing method embodiments. Details are not described herein again.

FIG. 10 is a schematic diagram depicting a structure of another congestion information collection apparatus according to an embodiment of this application. A congestion information collection apparatus 200 includes a second processing unit 201 and a second communications unit 202.

The second communications unit 202 is configured to send a first packet to a target node.

The second communications unit 202 is further configured to receive a congestion information record, where the congestion information record is sent by the target node after receiving the first packet, and the congestion information record includes congestion information that is of each segment link and that is recorded in the first packet.

The second processing unit 201 updates locally recorded congestion information based on the received congestion information record.

The second communications unit 202 is further configured to send a second packet based on updated locally recorded congestion information.

Specifically, the second processing unit 201 is configured to control and manage actions of the apparatus 200. For example, the second processing unit 201 is configured to perform S101 and S106 in FIG. 5, and/or is configured to perform operations performed by the source node in the method embodiments of this application. The second communications unit 202 is configured to receive a packet sent by another apparatus or send a packet to another apparatus.

The congestion information collection apparatus further includes a second storage unit 203. The second storage unit 203 stores program code and data. For example, the second storage unit 203 is configured to store the congestion information.

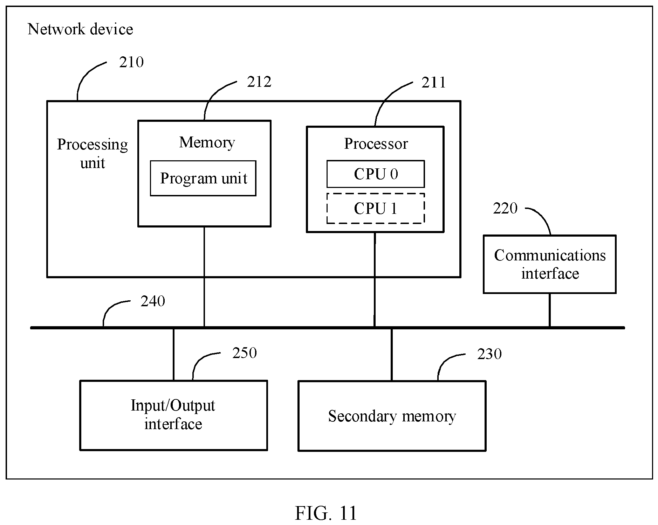

Specifically, for specific implementation of various operations performed by the apparatus 200, refer to specific operations performed by the source node in the foregoing method embodiments. Details are not described herein again. The processing unit 201 may be a processor or a controller, such as a central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The second communications unit 102 and the second communications unit 202 each may be a communications interface, a transceiver, a transceiver circuit, or the like. The communications interface is an umbrella term and may include one or more interfaces. The second storage unit 103 and the second storage unit 203 each may be a memory, or another module configured to provide a storage function or service. FIG. 11 is a schematic diagram depicting a structure of a congestion information collection device according to an embodiment of this application, where the congestion information collection may be a network device. The network device 300 includes at least a processing unit 210, and a communications interface 220. The processing unit 210, the communications interface 220, and a memory 230 are connected through a bus 240.

When the network device performs functions of a first connection node in the foregoing method embodiments, the communications interface 220 is configured to receive a first packet. The processing unit 210 is configured to obtain congestion information of a segment link including the first connection node, and record the congestion information in a parameter field corresponding to the first connection node in the first packet. The communications interface 220 is further configured to forward the first packet into which the congestion information is written.

Specifically, the processing unit 210 is configured to control and manage actions of the network device 300. For example, the processing unit 210 is configured to perform S102 and S103 in FIG. 5, and/or is configured to perform operations performed by the first connection node in the method embodiments of this application. The communications interface 220 is configured to receive a packet sent by another apparatus or send a packet to another apparatus. For example, the communications interface 220 receives the first packet and forwards the first packet into which the congestion information is written.

When the network device performs functions of a source node in the foregoing method embodiments, the communications interface 220 is configured to send a first packet to a target node. The communications interface 220 is further configured to receive a congestion information record, where the congestion information record is sent by the target node after receiving the first packet, and the congestion information record includes congestion information that is of each segment link and that is recorded in the first packet. The processing unit 210 updates locally recorded congestion information based on the received congestion information record. The communications interface 220 is further configured to send a second packet based on updated locally recorded congestion information.

Specifically, the processing unit 210 is configured to control and manage actions of the network device. For example, the processing unit 210 is configured to perform S101 and S106 in FIG. 5, and/or is configured to perform operations performed by the source node in the method embodiments of this application. The communications interface 220 is configured to receive a packet sent by another apparatus or send a packet to another apparatus.

The processing unit 210 may have a plurality of specific implementation forms. For example, the processing unit 210 may include a processor 211 and a storage unit. The storage unit may be a memory 212. The processor 211 performs a related operation based on a program unit stored in the memory 212. The program unit may be instructions, or referred to as computer instructions. The processor 211 may be a CPU or a graphics processing unit (graphics processing unit, GPU), and the processor 211 may be a single-core processor or a multi-core processor. The processor 211 may include a combination of a CPU and a hardware chip. The hardware chip may be an ASIC, a programmable logic device (programmable logic device, PLD), or a combination of the ASIC and the PLD. The PLD may be a complex programmable logic device (complex programmable logic device, CPLD), a field programmable logic gate array (FPGA), a generic array logic (generic array logic, GAL), or any combination thereof. Alternatively, the processor 211 may be individually implemented by using a logic device with built-in processing logic, for example, an FPGA or a DSP.

The communications interface 220 may be a wired interface (for example, an Ethernet interface) or a wireless interface (for example, a cellular network interface or a wireless local area network interface), and is configured to communicate with another module or device. Optionally, the network device may further include an input/output interface 250. The input/output interface 250 is connected to an input/output device, and is configured to receive input information and output an operation result. The input/output interface 250 may be a mouse, a keyboard, a display, a CD-ROM drive, or the like.

The bus 240 may be a peripheral component interconnect (Peripheral Component Interconnect, PCI) bus, an extended industry standard architecture (Extended Industry Standard Architecture, EISA) bus, and or the like. The bus 240 may be classified into an address bus, a data bus, a control bus, and the like. For ease of representation, only one thick line is used to represent the bus in FIG. 11, but this does not mean that there is only one bus or only one type of bus. Optionally, the network device may further include a secondary memory 230, which is generally referred to as an external memory. A storage medium of the secondary memory 230 may be a magnetic medium (for example, a floppy disk, a hard disk, or a magnetic tape), an optical medium (for example, an optical disc), a semiconductor medium (for example, a solid-state drive), or the like. The secondary memory 230 may also be configured to store program code and data, so that the processor 210 invokes the program code and the data stored in the secondary memory 230 to implement functions of the communications module and/or the processing module. In addition, the network device may include more or fewer components than those shown in FIG. 11, or may have different component configuration. Specifically, for specific implementation of various operations performed by the network device 300, refer to specific operations performed by the first connection node or a source node in the foregoing method embodiments. Details are not described herein again.

The embodiments of the present invention further provide a computer storage medium. The computer storage medium stores instructions. When the instructions are run on a processor, the method steps in the foregoing method embodiments may be implemented. For specific implementation of performing the method steps by the processor corresponding to the computer storage medium, refer to specific operations in the foregoing method embodiments. Details are not described herein again.

All or some of the foregoing embodiments may be implemented by using software, hardware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium (for example, an SSD).

## Claims

1. A congestion information collection method, comprising:
receiving (S102), by a first connection node, a first packet, wherein a forwarding path of the first packet comprises a plurality of connection nodes, the forwarding path is divided by the plurality of connection nodes into a plurality of segment links, the first connection node is any one of the plurality of connection nodes, the first packet comprises a plurality of parameter fields respectively corresponding to the plurality of connection nodes, and each of the plurality of parameter fields is used to record congestion information of a segment link;
obtaining, by the first connection node, congestion information of a segment link comprising the first connection node; and
recording (S103), by the first connection node, the congestion information in a parameter field corresponding to the first connection node in the first packet, wherein the segment link comprising the first connection node is a segment link between the first connection node and a next connection node on the forwarding path of the first packet, and the obtaining congestion information of a segment link comprising the first connection node comprises:
obtaining, by the first connection node, address information of a second connection node, wherein the second connection node is a next connection node on the forwarding path of the first packet;
determining, by the first connection node based on the address information of the second connection node, an egress port through which the first connection node forwards the first packet; and
**characterised in that** the method further comprises:
obtaining, by the first connection node, a congestion degree of the egress port, the congestion degree being represented by a congestion level, a higher congestion level indicating more severe congestion, and using the congestion degree as the congestion information of the segment link comprising the first connection node.

2. The method according to claim 1, wherein the obtaining, by the first connection node, a congestion degree of the egress port, and using the congestion degree as the congestion information of the segment link comprising the first connection node comprises:
obtaining, by the first connection node, the congestion degree of the egress port; and
when the congestion degree of the egress port is greater than a first preset threshold, determining, by the first connection node, that a link is congested between the first connection node and the second connection node, and using the information that the link is congested between the first connection node and the second connection node as the congestion information; or
when the congestion degree of the egress port is less than or equal to the first preset threshold, determining, by the first connection node, that a link is not congested between the first connection node and the second connection node, and using the information that the link is not congested between the first connection node and the second connection node as the congestion information.

3. The method according to claim 1, wherein the segment link comprising the first connection node is a segment link between the first connection node and a previous connection node on the forwarding path of the first packet, and the obtaining congestion information of a segment link comprising the first connection node comprises:
obtaining, by the first connection node, congestion information in a congestion field, wherein the congestion information in the congestion field indicates a congestion status of a link between the first connection node and a third connection node, the third connection node is a previous connection node on the forwarding path, and the congestion information in the congestion field is recorded by a forwarding node located on a segment link between the third connection node and the first connection node or recorded by the third connection node; and
using the congestion information in the congestion field as the congestion information of the segment link.

4. A congestion information collection method, comprising:
sending (S101), by a source node, a first packet to a target node, wherein a forwarding path of the first packet comprises a plurality of connection nodes, the forwarding path is divided by the plurality of connection nodes into a plurality of segment links, the first packet comprises a plurality of parameter fields, each of the plurality of parameter fields is used to record congestion information of a segment link, and the congestion information is recorded by a connection node on the forwarding path in a process of forwarding the first packet;
**characterised in that** the method further comprises:
receiving, by the source node, a congestion information record, wherein the congestion information record is sent by the target node after receiving the first packet, and the congestion information record comprises congestion information that is of each segment link and that is recorded in the first packet, wherein the congestion information comprises a congestion degree of each egress port through which that first packet passes to reach the target node, the congestion degree being represented by a congestion level, a higher congestion level indicating more severe congestion; and
updating (S106), by the source node, locally recorded congestion information based on the received congestion information record.

5. The method according to claim 4, wherein the method further comprises:
obtaining, by the source node, a destination address of a second packet; and
planning, by the source node, a forwarding path of the second packet based on locally updated congestion information, to avoid a segment link whose congestion degree is greater than a second preset threshold or a congested link in a planning process.

6. The method according to claim 4 or 5 , wherein before the sending, by a source node, a first packet to a target node, the method further comprises:
encapsulating, by the source node, a plurality of segment identifier fields into the first packet, wherein each of the plurality of segment identifier fields comprises address information corresponding to one connection node on the forwarding path and the parameter field.

7. A congestion information collection apparatus, wherein the apparatus comprises:
a communications unit (102), configured to receive a first packet, wherein a forwarding path of the first packet comprises a plurality of connection nodes, the forwarding path is divided by the plurality of connection nodes into a plurality of segment links, the congestion information collection apparatus is any one of the plurality of connection nodes, the first packet comprises a plurality of parameter fields respectively corresponding to the plurality of connection nodes, and each of the plurality of parameter fields is used to record congestion information of a segment link; and
a processing unit (101), configured to obtain congestion information of a segment link comprising the congestion information collection apparatus, and record the congestion information in a parameter field corresponding to the congestion information collection apparatus in the first packet, wherein the segment link comprising the congestion information collection apparatus is a segment link between the congestion information collection apparatus and a next connection node on the forwarding path of the first packet, and the processing unit is specifically configured to:
obtain address information of a second connection node, wherein the second connection node is a next connection node on the forwarding path of the first packet;
determine, based on the address information of the second connection node, an egress port through which the congestion information collection apparatus forwards the first packet; and
**characterised in that** the processing unit is configured to:
obtain a congestion degree of the egress port, the congestion degree being represented by a congestion level, a higher congestion level indicating more severe congestion and use the congestion degree as the congestion information of the segment link comprising the congestion information collection apparatus.

8. The apparatus according to claim 7, wherein the processing unit is specifically configured to:
obtain the congestion degree of the egress port; and
when the congestion degree of the egress port is greater than a first preset threshold, determine that a link is congested between the congestion information collection apparatus and the second connection node, and use the information that the link is congested between the congestion information collection apparatus and the second connection node as the congestion information; or
when the congestion degree of the egress port is less than or equal to the first preset threshold, determine that the link is not congested between the congestion information collection apparatus and the second connection node, and use the information that the link is not congested between the congestion information collection apparatus and the second connection node as the congestion information.

9. A congestion information collection apparatus, wherein the apparatus comprises:
a communications unit (202), configured to send a first packet to a target node, wherein a forwarding path of the first packet comprises a plurality of connection nodes, the forwarding path is divided by the plurality of connection nodes into a plurality of segment links, the first packet comprises a plurality of parameter fields, each of the plurality of parameter fields is used to record congestion information of a segment link, and the congestion information is recorded by a connection node on the forwarding path in a process of forwarding the first packet,
**characterised in that** that:
the communications unit is further configured to receive a congestion information record, wherein the congestion information record is sent by the target node after receiving the first packet, and the congestion information record comprises congestion information that is of each segment link and that is recorded in the first packet, wherein the congestion information comprises a congestion degree of each egress port through which that first packet passes to reach the target node, the congestion degree being represented by a congestion level, a higher congestion level indicating more severe congestion; and
a processing unit (201), configured to update locally recorded congestion information based on the received congestion information record.

10. The apparatus according to claim 9, wherein the processing unit is specifically configured to:
obtain a destination address of a second packet; and
plan a forwarding path of the second packet based on locally updated congestion information, to avoid a segment link whose congestion degree is greater than a second preset threshold or a congested link in a planning process.

11. The apparatus according to claim 9 or 10, wherein before the communications unit sends the first packet to the target node, the processing unit is further configured to:
encapsulate a plurality of segment identifier fields into the first packet, wherein each of the plurality of segment identifier fields comprises address information corresponding to one connection node on the forwarding path and the parameter field.

12. A congestion information collection system, wherein the system comprises the apparatus according to any one of claims 7 to 8 and the apparatus according to any one of claims 9 to 11.

## Patentansprüche

1. Überlastungsinformationensammelverfahren, umfassend:
Empfangen (S102), durch einen ersten Verbindungsknoten, eines ersten Pakets, wobei ein Weiterleitungspfad des ersten Pakets eine Vielzahl von Verbindungsknoten umfasst, der Weiterleitungspfad durch die Vielzahl von Verbindungsknoten in eine Vielzahl von Segmentverknüpfungen unterteilt ist, der erste Verbindungsknoten ein beliebiger der Vielzahl von Verbindungsknoten ist, das erste Paket eine Vielzahl von Parameterfeldern umfasst, die jeweils der Vielzahl von Verbindungsknoten entsprechen, und jedes der Vielzahl von Parameterfeldern verwendet wird, um Überlastungsinformationen einer Segmentverknüpfung aufzuzeichnen;
Erlangen, durch den ersten Verbindungsknoten, von Überlastungsinformationen einer Segmentverknüpfung, die den ersten Verbindungsknoten umfasst; und
Aufzeichnen (S103), durch den ersten Verbindungsknoten, der Überlastungsinformationen in einem Parameterfeld, das dem ersten Verbindungsknoten in dem ersten Paket entspricht, wobei die Segmentverknüpfung, die den ersten Verbindungsknoten umfasst, eine Segmentverknüpfung zwischen dem ersten Verbindungsknoten und einem nächsten Verbindungsknoten auf dem Weiterleitungspfad des ersten Pakets ist und das Erlangen von Überlastungsinformationen einer Segmentverknüpfung, die den ersten Verbindungsknoten umfasst, Folgendes umfasst:
Erlangen, durch den ersten Verbindungsknoten, von Adressinformationen eines zweiten Verbindungsknotens, wobei der zweite Verbindungsknoten ein nächster Verbindungsknoten auf dem Weiterleitungspfad des ersten Pakets ist;
Bestimmen, durch den ersten Verbindungsknoten, basierend auf den Adressinformationen des zweiten Verbindungsknotens, eines Ausgangsports, über den der erste Verbindungsknoten das erste Paket weiterleitet; und
**dadurch gekennzeichnet, dass** das Verfahren ferner Folgendes umfasst:
Erlangen, durch den ersten Verbindungsknoten, eines Überlastungsgrads des Ausgangsports, wobei der Überlastungsgrad durch ein Überlastungsniveau dargestellt wird, wobei ein höheres Überlastungsniveau eine schwerwiegendere Überlastung angibt, und Verwenden des Überlastungsgrads als die Überlastungsinformationen der Segmentverknüpfung, die den ersten Verbindungsknoten umfasst.

2. Verfahren nach Anspruch 1, wobei das Erlangen, durch den ersten Verbindungsknoten, eines Überlastungsgrads des Ausgangsports und das Verwenden des Überlastungsgrads als die Überlastungsinformationen der Segmentverknüpfung, die den ersten Verbindungsknoten umfasst, Folgendes umfasst:
Erlangen, durch den ersten Verbindungsknoten, des Überlastungsgrads des Ausgangsports; und
wenn der Überlastungsgrad des Ausgangsports größer als ein erster voreingestellter Schwellenwert ist, Bestimmen, durch den ersten Verbindungsknoten, dass eine Verknüpfung zwischen dem ersten Verbindungsknoten und dem zweiten Verbindungsknoten überlastet ist, und Verwenden der Informationen, dass die Verknüpfung zwischen dem ersten Verbindungsknoten und dem zweiten Verbindungsknoten überlastet ist, als die Überlastungsinformationen; oder
wenn der Überlastungsgrad des Ausgangsports kleiner als der oder gleich dem voreingestellten Schwellenwert ist, Bestimmen, durch den ersten Verbindungsknoten, dass eine Verknüpfung zwischen dem ersten Verbindungsknoten und dem zweiten Verbindungsknoten nicht überlastet ist, und Verwenden der Informationen, dass die Verknüpfung zwischen dem ersten Verbindungsknoten und dem zweiten Verbindungsknoten nicht überlastet ist, als die Überlastungsinformationen.

3. Verfahren nach Anspruch 1, wobei die Segmentverknüpfung, die den ersten Verbindungsknoten umfasst, eine Segmentverknüpfung zwischen dem ersten Verbindungsknoten und einem vorherigen Verbindungsknoten auf dem Weiterleitungspfad des ersten Pakets ist und das Erlangen von Überlastungsinformationen einer Segmentverknüpfung, die den ersten Verbindungsknoten umfasst, Folgendes umfasst:
Erlangen, durch den ersten Verbindungsknoten, von Überlastungsinformationen in einem Überlastungsfeld, wobei die Überlastungsinformationen in dem Überlastungsfeld einen Überlastungsstatus einer Verknüpfung zwischen dem ersten Verbindungsknoten und einem dritten Verbindungsknoten angeben, der dritte Verbindungsknoten ein vorheriger Verbindungsknoten auf dem Weiterleitungspfad ist und die Überlastungsinformationen in dem Überlastungsfeld durch einen Weiterleitungsknoten aufgezeichnet werden, der sich auf einer Segmentverknüpfung zwischen dem dritten Verbindungsknoten und dem ersten Verbindungsknoten befindet, oder durch dritten Verbindungsknoten aufgezeichnet werden; und
Verwenden der Überlastungsinformationen in dem Überlastungsfeld als die Überlastungsinformationen der Segmentverknüpfung.

4. Überlastungsinformationensammelverfahren, umfassend:
Senden (S101), durch einen Quellknoten, eines ersten Pakets an einen Zielknoten, wobei ein Weiterleitungspfad des ersten Pakets eine Vielzahl von Verbindungsknoten umfasst, der Weiterleitungspfad durch die Vielzahl von Verbindungsknoten in eine Vielzahl von Segmentverknüpfungen unterteilt ist, das erste Paket eine Vielzahl von Parameterfeldern umfasst, jedes der Vielzahl von Parameterfeldern zum Aufzeichnen von Überlastungsinformationen einer Segmentverknüpfung verwendet wird und die Überlastungsinformationen durch einen Verbindungsknoten auf dem Weiterleitungspfad in einem Prozess des Weiterleitens des ersten Pakets aufgezeichnet werden;
**dadurch gekennzeichnet, dass** das Verfahren ferner Folgendes umfasst:
Empfangen, durch den Quellknoten, einer Aufzeichnung von Überlastungsinformationen, wobei die Aufzeichnung von Überlastungsinformationen von dem Zielknoten nach Empfangen des ersten Pakets gesendet wird und die Aufzeichnung von Überlastungsinformationen Überlastungsinformationen umfasst, die von jeder Segmentverknüpfung stammen und die in dem ersten Datenpaket aufgezeichnet sind, wobei die Überlastungsinformationen einen Überlastungsgrad jedes Ausgangsports umfassen, den das erste Paket durchläuft, um den Zielknoten zu erreichen, und der Überlastungsgrad durch ein Überlastungsniveau dargestellt wird, wobei ein höheres Überlastungsniveau eine schwerwiegendere Überlastung angibt; und
Aktualisieren (S106), durch den Quellknoten, lokal aufgezeichneter Überlastungsinformationen basierend auf der empfangenen Aufzeichnung von Überlastungsinformationen.

5. Verfahren nach Anspruch 4, wobei das Verfahren ferner Folgendes umfasst:
Erlangen, durch den Quellknoten, einer Zieladresse eines zweiten Pakets; und
Planen, durch den Quellknoten, eines Weiterleitungspfads des zweiten Pakets basierend auf lokal aktualisierten Überlastungsinformationen, um in einem Planungsprozess eine Segmentverknüpfung, deren Überlastungsgrad größer als ein zweiter voreingestellter Schwellenwert ist, oder eine überlastete Verknüpfung zu vermeiden.

6. Verfahren nach Anspruch 4 oder 5, wobei vor dem Senden eines ersten Pakets durch einen Quellknoten an einen Zielknoten das Verfahren ferner Folgendes umfasst:
Einkapseln, durch den Quellknoten, mehrerer Segmentkennungsfelder in das erste Paket, wobei jedes der Vielzahl von Segmentkennungsfeldern Adressinformationen, die einem Verbindungsknoten auf dem Weiterleitungspfad entsprechen, und das Parameterfeld umfasst.

7. Überlastungsinformationensammelvorrichtung, wobei die Vorrichtung Folgendes umfasst:
eine Kommunikationseinheit (102), die dazu konfiguriert ist, ein erstes Paket zu empfangen, wobei ein Weiterleitungspfad des ersten Pakets eine Vielzahl von Verbindungsknoten umfasst, der Weiterleitungspfad durch die Vielzahl von Verbindungsknoten in eine Vielzahl von Segmentverknüpfungen unterteilt ist, die Überlastungsinformationensammelvorrichtung ein beliebiger der Vielzahl von Verbindungsknoten ist, das erste Paket eine Vielzahl von Parameterfeldern umfasst, die jeweils der Vielzahl von Verbindungsknoten entsprechen, und jedes der Vielzahl von Parameterfeldern verwendet wird, um Überlastungsinformationen einer Segmentverknüpfung aufzuzeichnen; und
eine Verarbeitungseinheit (101), die dazu konfiguriert ist, Überlastungsinformationen einer Segmentverknüpfung, die die Überlastungsinformationensammelvorrichtung umfasst, zu erlangen, und die Überlastungsinformationen in einem Parameterfeld, das der Überlastungsinformationensammelvorrichtung entspricht, aufzuzeichnen, wobei die Segmentverknüpfung, die die Überlastungsinformationensammelvorrichtung umfasst, eine Segmentverknüpfung zwischen der Überlastungsinformationensammelvorrichtung und einem nächsten Verbindungsknoten auf dem Weiterleitungspfad des ersten Pakets ist und die Verarbeitungseinheit speziell zu Folgendem konfiguriert ist:
Erlangen von Adressinformationen eines zweiten Verbindungsknotens, wobei der zweite Verbindungsknoten ein nächster Verbindungsknoten auf dem Weiterleitungspfad des ersten Pakets ist;
Bestimmen basierend auf den Adressinformationen des zweiten Verbindungsknotens, eines Ausgangsports, über den die Überlastungsinformationensammelvorrichtung das erste Paket weiterleitet; und
**dadurch gekennzeichnet, dass** die Verarbeitungseinheit zu Folgendem konfiguriert ist:
Erlangen eines Überlastungsgrads des Ausgangsports, wobei der Überlastungsgrad durch ein Überlastungsniveau dargestellt wird, wobei ein höheres Überlastungsniveau eine schwerwiegendere Überlastung angibt, und Verwenden des Überlastungsgrads als die Überlastungsinformationen der Segmentverknüpfung, die die Überlastungsinformationensammelvorrichtung umfasst.

8. Vorrichtung nach Anspruch 7, wobei die Verarbeitungseinheit speziell zu Folgendem konfiguriert ist:
Erlangen des Überlastungsgrads des Ausgangsports; und
wenn der Überlastungsgrad des Ausgangsports größer als ein erster voreingestellter Schwellenwert ist, Bestimmen, dass eine Verknüpfung zwischen der Überlastungsinformationensammelvorrichtung und dem zweiten Verbindungsknoten überlastet ist, und Verwenden der Informationen, dass die Verknüpfung zwischen der Überlastungsinformationensammelvorrichtung und dem zweiten Verbindungsknoten überlastet ist, als die Überlastungsinformationen; oder
wenn der Überlastungsgrad des Ausgangsports kleiner als oder gleich dem voreingestellten Schwellenwert ist, Bestimmen, dass die Verknüpfung zwischen der Überlastungsinformationensammelvorrichtung und dem zweiten Verbindungsknoten nicht überlastet ist, und Verwenden der Informationen, dass die Verknüpfung zwischen der Überlastungsinformationensammelvorrichtung und dem zweiten Verbindungsknoten nicht überlastet ist, als die Überlastungsinformationen.

9. Überlastungsinformationensammelvorrichtung, wobei die Vorrichtung Folgendes umfasst:
eine Kommunikationseinheit (202), die dazu konfiguriert ist, ein erstes Paket an einen Zielknoten zu senden, wobei ein Weiterleitungspfad des ersten Pakets eine Vielzahl von Verbindungsknoten umfasst, der Weiterleitungspfad durch die Vielzahl von Verbindungsknoten in eine Vielzahl von Segmentverknüpfungen unterteilt ist, das erste Paket eine Vielzahl von Parameterfeldern umfasst, jedes der Vielzahl von Parameterfeldern zum Aufzeichnen von Überlastungsinformationen einer Segmentverknüpfung verwendet wird und die Überlastungsinformationen durch einen Verbindungsknoten auf dem Weiterleitungspfad in einem Prozess des Weiterleitens des ersten Pakets aufgezeichnet werden,
**dadurch gekennzeichnet, dass**:
die Kommunikationseinheit ferner dazu konfiguriert ist, eine Aufzeichnung von Überlastungsinformationen zu empfangen, wobei die Aufzeichnung von Überlastungsinformationen von dem Zielknoten nach Empfangen des ersten Pakets gesendet wird und die Aufzeichnung von Überlastungsinformationen Überlastungsinformationen umfasst, die von jeder Segmentverknüpfung stammen und die in dem ersten Datenpaket aufgezeichnet sind, wobei die Überlastungsinformationen einen Überlastungsgrad jedes Ausgangsports umfassen, den das erste Paket durchläuft, um den Zielknoten zu erreichen, und der Überlastungsgrad durch ein Überlastungsniveau dargestellt wird, wobei ein höheres Überlastungsniveau eine schwerwiegendere Überlastung angibt; und
eine Verarbeitungseinheit (201), die dazu konfiguriert ist, lokal aufgezeichnete Überlastungsinformationen basierend auf der empfangenen Aufzeichnung von Überlastungsinformationen zu aktualisieren.

10. Vorrichtung nach Anspruch 9, wobei die Verarbeitungseinheit speziell zu Folgendem konfiguriert ist:
Erlangen einer Zieladresse eines zweiten Pakets; und
Planen eines Weiterleitungspfads des zweiten Pakets basierend auf lokal aktualisierten Überlastungsinformationen, um in einem Planungsprozess eine Segmentverknüpfung, deren Überlastungsgrad größer als ein zweiter voreingestellter Schwellenwert ist, oder eine überlastete Verknüpfung zu vermeiden.

11. Vorrichtung nach Anspruch 9 oder 10, wobei, bevor die Kommunikationseinheit das erste Paket an den Zielknoten sendet, die Verarbeitungseinheit ferner zu Folgendem konfiguriert ist:
Einkapseln mehrerer Segmentkennungsfelder in das erste Paket, wobei jedes der Vielzahl von Segmentkennungsfeldern Adressinformationen, die einem Verbindungsknoten auf dem Weiterleitungspfad entsprechen, und das Parameterfeld umfasst.

12. Überlastungsinformationensammelsystem, wobei das System die Vorrichtung nach einem der Ansprüche 7 bis 8 und die Vorrichtung nach einem der Ansprüche 9 bis 11 umfasst.

## Revendications

1. Procédé de collecte d'informations de congestion, comprenant :
la réception (S102), par un premier noeud de connexion, d'un premier paquet, un chemin de transfert du premier paquet comprenant une pluralité de noeuds de connexion, le chemin de transfert étant divisé par la pluralité de noeuds de connexion en une pluralité de liaisons de segments, le premier le noeud de connexion est l'une quelconque de la pluralité de noeuds de connexion, le premier paquet comprend une pluralité de champs de paramètres correspondant respectivement à la pluralité de noeuds de connexion, et chacune de la pluralité de champs de paramètres est utilisée pour enregistrer des informations de congestion d'une liaison de segment ;
l'obtention, par le premier noeud de connexion, des informations de congestion d'une liaison de segment comprenant le premier noeud de connexion ; et
l'enregistrement (S103), par le premier noeud de connexion, des informations de congestion dans un champ de paramètres correspondant au premier noeud de connexion dans le premier paquet, la liaison de segment comprenant le premier noeud de connexion étant une liaison de segment entre le premier noeud de connexion et un noeud de connexion suivant sur le chemin de transfert du premier paquet, et l'obtention d'informations de congestion d'une liaison de segment comprenant le premier noeud de connexion comprend :
l'obtention, par le premier noeud de connexion, des informations d'adresse d'un deuxième noeud de connexion, le deuxième noeud de connexion étant un noeud de connexion suivant sur le chemin de transfert du premier paquet ;
la détermination, par le premier noeud de connexion, sur la base des informations d'adresse du deuxième noeud de connexion, d'un port de sortie par lequel le premier noeud de connexion transmet le premier paquet ; et
**caractérisé en ce que** le procédé comprend en outre :
l'obtention, par le premier noeud de connexion, d'un degré de congestion du port de sortie, le degré de congestion étant représenté par un niveau de congestion, un niveau de congestion plus élevé indiquant une congestion plus grave, et l'utilisation du degré de congestion comme informations de congestion de la liaison de segment comprenant le premier noeud de connexion.

2. Procédé selon la revendication 1, dans lequel l'obtention, par le premier noeud de connexion, d'un degré de congestion du port de sortie, et l'utilisation du degré de congestion comme informations de congestion de la liaison de segment comprenant le premier noeud de connexion, comprennent :
l'obtention, par le premier noeud de connexion, du degré de congestion du port de sortie ; et
lorsque le degré de congestion du port de sortie est supérieur à un premier seuil prédéfini, la détermination, par le premier noeud de connexion, qu'une liaison est congestionnée entre le premier noeud de connexion et le deuxième noeud de connexion, et l'utilisation des informations selon lesquelles la liaison est congestionnée entre le premier noeud de connexion et le deuxième noeud de connexion comme informations de congestion ; ou
lorsque le degré de congestion du port de sortie est inférieur ou égal au premier seuil prédéfini, la détermination, par le premier noeud de connexion, qu'une liaison n'est pas congestionnée entre le premier noeud de connexion et le deuxième noeud de connexion, et l'utilisation des informations selon lesquelles la liaison n'est pas congestionnée entre le premier noeud de connexion et le deuxième noeud de connexion comme informations de congestion.

3. Procédé selon la revendication 1, dans lequel la liaison de segment comprenant le premier noeud de connexion est une liaison de segment entre le premier noeud de connexion et un noeud de connexion précédent sur le chemin de transfert du premier paquet, et l'obtention d'informations de congestion d'une liaison de segment comprenant le premier noeud de connexion comprend :
l'obtention, par le premier noeud de connexion, des informations de congestion dans un champ de congestion, les informations de congestion dans le champ de congestion indiquant un état de congestion d'une liaison entre le premier noeud de connexion et un troisième noeud de connexion, le troisième noeud de connexion étant un noeud de connexion précédent sur le chemin de transfert, et les informations de congestion dans le champ de congestion sont enregistrées par un noeud de transfert situé sur une liaison de segment entre le troisième noeud de connexion et le premier noeud de connexion ou enregistrées par le troisième noeud de connexion ; et
l'utilisation des informations de congestion dans le champ de congestion comme informations de congestion de la liaison de segment.

4. Procédé de collecte d'informations de congestion, comprenant :
l'envoi (S101), par un noeud source, d'un premier paquet à un noeud cible, un chemin de transfert du premier paquet comprenant une pluralité de noeuds de connexion, le chemin de transfert étant divisé par la pluralité de noeuds de connexion en une pluralité de liaisons de segments, le premier paquet comprend une pluralité de champs de paramètres, chacune de la pluralité de champs de paramètres étant utilisée pour enregistrer des informations de congestion d'une liaison de segment, et les informations de congestion étant enregistrées par un noeud de connexion sur le chemin de transfert dans un processus de transfert du premier paquet ;
**caractérisé en ce que** le procédé comprend en outre :
la réception, par le noeud source, d'un enregistrement d'informations de congestion, l'enregistrement d'informations de congestion étant envoyé par le noeud cible après réception du premier paquet, et l'enregistrement d'informations de congestion comprenant des informations de congestion qui proviennent de chaque liaison de segment et qui sont enregistrées dans le premier paquet, les informations de congestion comprenant un degré de congestion de chaque port de sortie par lequel passe ce premier paquet pour atteindre le noeud cible, le degré de congestion étant représenté par un niveau de congestion, un niveau de congestion plus élevé indiquant une congestion plus grave ; et
la mise à jour (S106), par le noeud source, des informations de congestion enregistrées localement sur la base de l'enregistrement d'informations de congestion reçues.

5. Procédé selon la revendication 4, dans lequel le procédé comprend en outre :
l'obtention, par le noeud source, d'une adresse de destination d'un second paquet ; et
la planification, par le noeud source, d'un chemin de transfert du second paquet sur la base d'informations de congestion mises à jour localement, pour éviter une liaison de segment dont le degré de congestion est supérieur à un second seuil prédéfini ou à une liaison congestionnée dans un processus de planification.

6. Procédé selon la revendication 4 ou 5, dans lequel avant l'envoi, par un noeud source, d'un premier paquet vers un noeud cible, le procédé comprend en outre :
l'encapsulation, par le noeud source, d'une pluralité de champs d'identifiant de segment dans le premier paquet, chacune de la pluralité de champs d'identifiant de segment comprenant des informations d'adresse correspondant à un noeud de connexion sur le chemin de transfert et au champ de paramètre.

7. Appareil de collecte d'informations de congestion, dans lequel l'appareil comprend :
une unité de communication (102), configurée pour recevoir un premier paquet, un chemin de transfert du premier paquet comprenant une pluralité de noeuds de connexion, le chemin de transfert étant divisé par la pluralité de noeuds de connexion en une pluralité de liaisons de segments, l'appareil de collecte d'informations de congestion est l'une quelconque de la pluralité de noeuds de connexion, le premier paquet comprend une pluralité de champs de paramètres correspondant respectivement à la pluralité de noeuds de connexion, et chacune de la pluralité de champs de paramètres est utilisée pour enregistrer des informations de congestion d'une liaison de segment ; et
une unité de traitement (101), configurée pour obtenir des informations de congestion d'une liaison de segment comprenant l'appareil de collecte d'informations de congestion, et enregistrer les informations de congestion dans un champ de paramètres correspondant à l'appareil de collecte d'informations de congestion dans le premier paquet, dans lequel la liaison de segment comprenant le l'appareil de collecte d'informations de congestion est une liaison de segment entre l'appareil de collecte d'informations de congestion et un noeud de connexion suivant sur le chemin de transfert du premier paquet, et l'unité de traitement est spécifiquement configurée pour :
obtenir les informations d'adresse d'un deuxième noeud de connexion, le deuxième noeud de connexion étant un noeud de connexion suivant sur le chemin de transfert du premier paquet ;
déterminer, sur la base des informations d'adresse du deuxième noeud de connexion, un port de sortie par lequel l'appareil de collecte d'informations de congestion transmet le premier paquet ; et
**caractérisé en ce que** l'unité de traitement est configurée pour :
obtenir un degré de congestion du port de sortie, le degré de congestion étant représenté par un niveau de congestion, un niveau de congestion plus élevé indiquant une congestion plus grave et utiliser le degré de congestion comme informations de congestion de la liaison de segment comprenant l'appareil de collecte d'informations de congestion.

8. Appareil selon la revendication 7, dans lequel l'unité de traitement est configurée spécifiquement pour :
obtenir le degré de congestion du port de sortie ; et
lorsque le degré de congestion du port de sortie est supérieur à un premier seuil prédéfini, déterminer qu'une liaison est congestionnée entre l'appareil de collecte d'informations de congestion et le deuxième noeud de connexion, et utiliser les informations selon lesquelles la liaison est congestionnée entre l'appareil de collecte d'informations de congestion et le deuxième noeud de connexion en tant qu'informations de congestion ; ou
lorsque le degré de congestion du port de sortie est inférieur ou égal au premier seuil prédéfini, déterminer que la liaison n'est pas congestionnée entre l'appareil de collecte d'informations de congestion et le deuxième noeud de connexion, et utiliser les informations selon lesquelles la liaison n'est pas congestionnée entre l'appareil de collecte d'informations de congestion et le deuxième noeud de connexion comme informations de congestion.

9. Appareil de collecte d'informations de congestion, dans lequel l'appareil comprend :
une unité de communication (202), configurée pour envoyer un premier paquet à un noeud cible, un chemin de transfert du premier paquet comprenant une pluralité de noeuds de connexion, le chemin de transfert étant divisé par la pluralité de noeuds de connexion en une pluralité de liaisons de segments, le premier paquet comprend une pluralité de champs de paramètres, chacune de la pluralité de champs de paramètres étant utilisée pour enregistrer des informations de congestion d'une liaison de segment, et les informations de congestion étant enregistrées par un noeud de connexion sur le chemin de transfert dans un processus de transfert du premier paquet,
**caractérisé en ce que** :
l'unité de communication est en outre configurée pour recevoir un enregistrement d'informations de congestion, l'enregistrement d'informations de congestion étant envoyé par le noeud cible après réception du premier paquet, et l'enregistrement d'informations de congestion comprenant des informations de congestion qui proviennent de chaque liaison de segment et qui sont enregistrées dans le premier paquet, les informations de congestion comprenant un degré de congestion de chaque port de sortie par lequel passe ce premier paquet pour atteindre le noeud cible, le degré de congestion étant représenté par un niveau de congestion, un niveau de congestion plus élevé indiquant une congestion plus grave ; et
une unité de traitement (201), configurée pour mettre à jour les informations de congestion enregistrées localement sur la base de l'enregistrement d'informations de congestion reçues.

10. Appareil selon la revendication 9, dans lequel l'unité de traitement est configurée spécifiquement pour :
obtenir une adresse de destination d'un second paquet ; et
planifier un chemin de transfert du second paquet sur la base d'informations de congestion mises à jour localement, pour éviter une liaison de segment dont le degré de congestion est supérieur à un second seuil prédéfini ou à une liaison congestionnée dans un processus de planification.

11. Appareil selon la revendication 9 ou 10, dans lequel avant que l'unité de communication n'envoie le premier paquet au noeud cible, l'unité de traitement est en outre configurée pour :
encapsuler une pluralité de champs d'identifiant de segment dans le premier paquet, chacune de la pluralité de champs d'identifiant de segment comprenant des informations d'adresse correspondant à un noeud de connexion sur le chemin de transfert et au champ de paramètre.

12. Système de collecte d'informations de congestion, dans lequel le système comprend l'appareil selon l'une quelconque des revendications 7 à 8 et l'appareil selon l'une quelconque des revendications 9 à 11.
